# EUROPEAN PATENT APPLICATION

(11) **EP 3 070 611 A1**
(43) Date of publication of application: **21.09.2016**
(21) Application number: 15159577.4
(22) Date of filing: 18.03.2015
(51) Int. Cl.: G06F 11/36

(54) **STATISTICAL MODEL-BASED TEST DESIGN FOR EFFECTIVE TEST CASE GENERATION**

(71) Applicant: Vestel Elektronik Sanayi ve Ticaret A.S., 45030 Manisa (TR)
(72) Inventor: Metin, Duygu, 45030 Manisa (TR); Gebizli, Ceren, 45030 Manisa (TR)
(74) Representative: Ascherl, Andreas

(57) **Abstract**

The invention relates to a method of refining a system model of a test design, to a computer program, to a machine-readable storage unit and to a use of the method in at least one of web and desktop applications and in embedded system applications. The method comprises the steps: a) determining (1) a sample of the test design according to a predetermined system model (10) comprising a plurality of state transitions and a corresponding plurality of transition probability values; b) testing (2) the determined sample according to a predetermined risk of failure, thereby generating (3) the test design based on the plurality of state transitions and/or based on the plurality of transition probability values of step a); and c) recalculating (4) the plurality of transition probability values based on the result of step b) and updating (5) the plurality of transition probability values. In this way, a possibility is provided for detecting critical errors of a test design while reducing the number of test cases and the testing time.

## Description

### FIELD OF THE INVENTION

The invention relates to a method of refining a system model of a test design, to a computer program and to a machine-readable storage unit. The invention also relates to a use of the method in at least one of web and desktop applications and in embedded system applications.

### BACKGROUND OF THE INVENTION

Document US 8,191,022 B2 describes a method for simulating a system without a time invariant or periodically time-varying steady state. The method limits a number of states included in a Markov chain model by discretizing the states based on Gaussian decomposition, utilizes a state extrapolation algorithm that discovers only recurrent states, and/or utilizes a state truncation algorithm that eliminates states with negligible stationary probabilities.

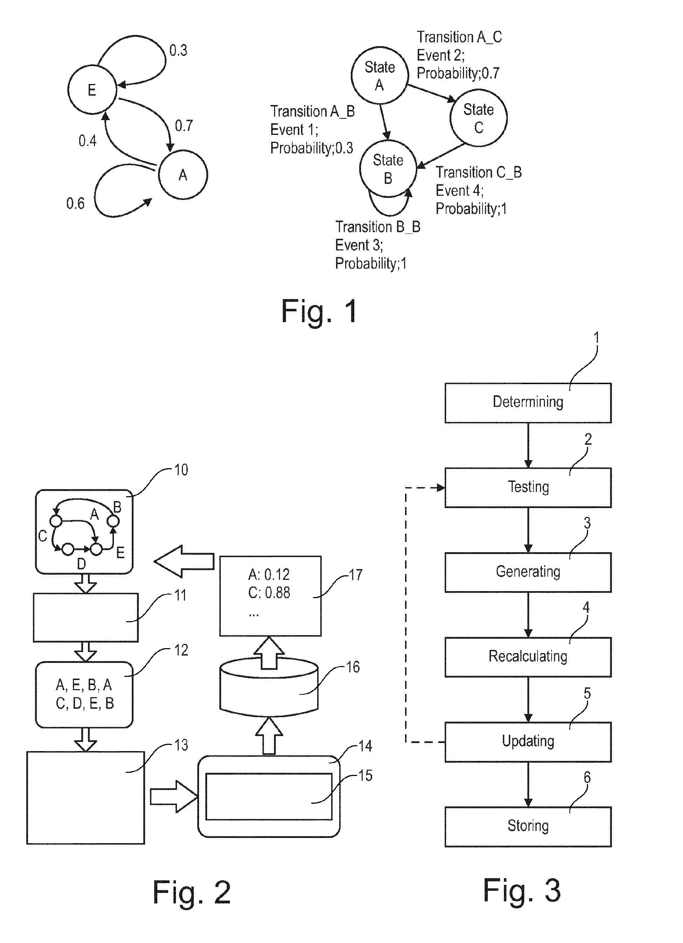

It is known that testing a test design corresponds to sampling the test design. In order to determine a correct sample one needs to determine what to test and how much to test. A model-based testing (MBT) systemizes test case generation based on models that represent the desired behavior of the system under test (SUT). In such models for all components of the SUT, the states, inputs, outputs and probabilities for the corresponding transitions should be determined. A state represents a current status of e.g. a television (TV) that can be turned off, turned on, show the input selection etc. A transition is used to change the current state to the next state within a specific probability, e.g. from a turned-off state to a turned-on state. Fig. 1 exemplary shows different states and their corresponding transition probabilities. Furthermore, risk-based testing is a type of effective software testing that prioritizes the tests of features and modules in software based on the risk of failure.

In classical testing scenarios there is a problem that critical errors of a test design cannot be detected sufficiently accurate without increasing the number of test cases and/or without increasing the testing time.

### SUMMARY OF THE INVENTION

It is the object of the invention to provide a possibility for detecting critical errors of a test design while reducing the number of test cases and the testing time.

This object is achieved by the subject matter of the independent claims. Preferred embodiments are defined in the sub claims.

According to a first aspect of the invention, this object is achieved by a method of refining a system model of a test design, comprising the steps: a) determining a sample of the test design according to a predetermined system model comprising a plurality of state transitions and a corresponding plurality of transition probability values; b) testing the determined sample according to a predetermined risk of failure, thereby generating the test design based on the plurality of state transitions and/or based on the plurality of transition probability values of step a); and c) recalculating the plurality of transition probability values based on the result of step b) and updating the plurality of transition probability values.

It is an idea of the invention to provide an iterative approach in which system models of a test design are refined based on the principles of risk-based testing. Preferably, a statistically appropriate sample is determined and tested at a rate based on risk. An effective test design technique according to the invention is provided by combining statistical models and risk analysis.

According to a preferred embodiment of the invention, the updated plurality of transition probability values is used in the step of testing such that the system model of the test design is sequentially refined. The term "sequentially" refers to the fact that preferably an iterative approach is utilized. Hence, each iteration step leads to a refined system model that reflects the behavior of the test design with a predetermined accuracy.

According to a preferred embodiment of the invention, the predetermined system model comprises at least one of a Markov chain, an event sequence graph, a unified modelling language and a finite state automation. Hence, Markov chain models are preferably used as system models in which transitions among systems states are annotated with probabilities. Then, a test suite is generated and executed. After each test execution, transition probabilities are preferably updated based on the risk that a failure occurs.

According to a preferred embodiment of the invention, the method further comprises the step of storing the updated plurality of transition probability values in a memory unit, thereby generating a memory usage profile adapted for revealing a test path that leads to a memory leak. Hence, it is easily possible to store the updated values and to generate a profile that reflects memory leaks. Preferably, during the step of testing utilization of memory is measured before and after the step of generating the test design such that a memory leak value is determined. Hence, it is always possible to measure and accurately determine memory leak. Preferably, each transition probability value out of the updated plurality of transition probability values is proportional to the determined memory leak value.

According to a preferred embodiment of the invention, the step of generating the test design is performed according to a predetermined algorithm. The predetermined algorithm preferably comprises at least one of a Chinese postman, a user-oriented, a most probable, a random and a tagged path algorithm. Different algorithms can thus be combined or a single algorithm can be chosen that is adequate for generating the test design.

According to a preferred embodiment of the invention, steps b) and c) of testing, generating, recalculating and updating are repeated until a predetermined condition is fulfilled. Hence, it is assured that the system model is refined in a step-by-step manner such that the behavior of the test design is accurately reflected. The predetermined condition preferably corresponds to a stop criterion. Such a stop criterion can for instance be that a deviation between all or between a predefined number of the updated transition probability values and the previous transition probability values lies within a predetermined range.

According to a second aspect of the invention, the above mentioned object is achieved by a computer program, loadable or loaded in a memory of a computer with orders readable by the computer for performing the method according to the first aspect of the invention, when the orders are performed on the computer.

According to a third aspect of the invention, the above mentioned object is achieved by a machine-readable storage unit, on which a computer program according to the second aspect of the invention is stored.

According to a fourth aspect of the invention, the above mentioned object is achieved by a use of a method according to the first aspect of the invention in at least one of web and desktop applications and in embedded system applications, such as automotive, mobile phone, white goods, television and set-top-boxes. Since Markov chains have many applications on statistical models of real-world processes, the proposed inventive idea is used to generate effective black box test cases from high-level web and desktop applications to low-level embedded systems.

### BRIEF DESCRIPTION OF THE DRAWINGS

These and other aspects of the invention will be apparent from and elucidated with reference to the embodiments described hereinafter which should be considered as examples of the invention without limiting the scope of the invention.

In the drawings:
- Fig. 1: exemplary shows a Markov chain model with different states and their corresponding transition probability values;
- Fig. 2: schematically illustrates a method of refining a system model of a test design according to a first preferred embodiment of the invention;
- Fig. 3: schematically illustrates the steps of a method of refining a system model of a test design according to a second preferred embodiment of the invention;
- Fig. 4: shows a top level system model of a smart TV system according to a third preferred embodiment of the invention;
- Fig. 5: shows a sub-model of a module of the top level system model according to the third preferred embodiment of the invention;
- Fig. 6: shows a recorded memory usage during a test execution according to the third preferred embodiment of the invention; and
- Fig. 7: shows the top level and updated system model of the smart TV system according to the third preferred embodiment of the invention.

### DETAILED DESCRIPTION OF EMBODIMENTS

An iterative approach for refining a system model based on the principles of risk-based testing is utilized in a first preferred embodiment of the invention. Fig. 2 schematically illustrates a method of refining a system model of a test design according to the first preferred embodiment of the invention. A system model 10 with Markov chains is defined in which transitions among system states are annotated with probability values. These values are preferably assigned based on functional importance or usage profile. In this first preferred embodiment they are initially equal to each other. The system model 10 is provided to an MBT tool 11. The MBT tool 11 traverses the system model 10 based on transition probabilities and generates a set of test cases 12. These test cases 12 are executed with an automation tool 13 while the memory usage profile 16 of the system under test 14 and its memory usage logger 15 is measured or collected, respectively. The memory usage profile 16 reveals test paths that lead to memory leaks. The transitions probabilities are recalculated and updated 17 in the system model 10 so that these test path are used more often during test case generation in the next iteration.

Fig. 3 schematically illustrates the steps of a method of refining a system model of a test design according to a second preferred embodiment of the invention. In a first step, a sample of the test design according to a predetermined system model is determined 1. In a second step, the determined sample is tested 2 according to a predetermined risk of failure, thereby the test design is generated 3 based on the plurality of state transitions and based on the plurality of transition probability values given in the first step. In a third step, the plurality of transition probability values are recalculated 4 based on the result of the second step and the plurality of transition probability values are updated 5. In a fourth step, the updated plurality of transition probability values is used in the second step such that the system model of the test design is sequentially or iteratively refined. In a final step, the updated plurality of transition probability values is stored 6 in a memory unit, thereby a memory usage profile adapted for revealing a test path that leads to a memory leak is generated.

According to other preferred embodiments, no iteration is required since the system model used is very close to accurately resemble the actual behavior of the test design. Therefore, the updated plurality of transition probability values is stored in the memory unit directly after the third step.

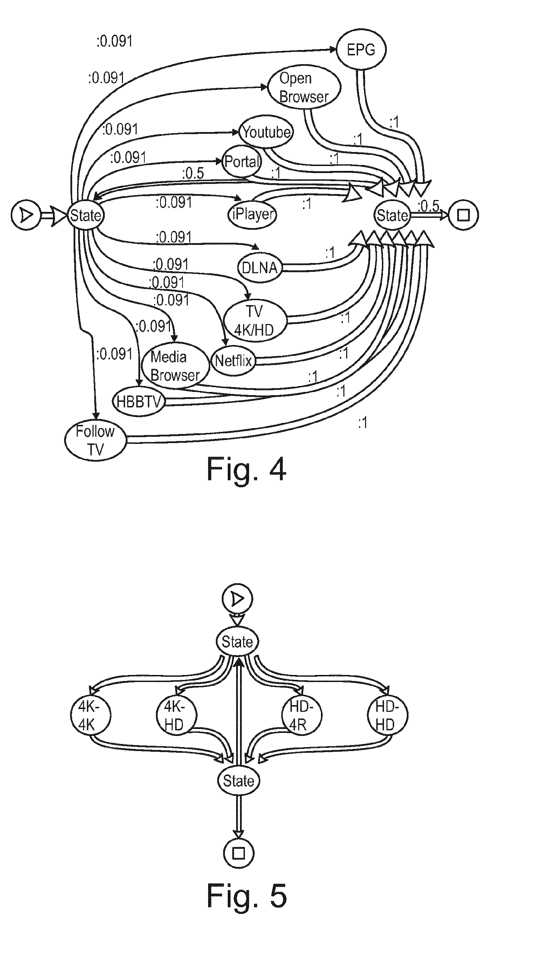

The inventive idea is now applied in a context of an industrial case study for model-based testing of smart TV systems in order to measure their memory usage and leakage. Fig. 4 shows a top level system model of the smart TV system according to a third preferred embodiment of the invention. To check the memory leak of the smart TV system tests based on experience have been executed with a number of 230 test cases. When the TV software is analyzed, features or modules have been identified to be highly resource consuming, i.e. memory and/or processor time consuming. These features are represented in the system model as submodels. The represented features are Electronic Program Guide (EPG), TV 4K-HD Broadcast (4K/HD), Media Browser (MB), Open Browser (OB), Portal, Youtube (Ytube), HBBTV, iPlayer, DLNA, Follow TV (FTV) and Netflix. Fig. 4 also shows that state transitions are annotated with probability values, which are equal for different features. An MBT tool generated 110 test cases based on this model including 10 test cases per feature. The generated test cases are executed and during the test execution, memory utilization is measured before and after the execution of test cases regarding each feature.

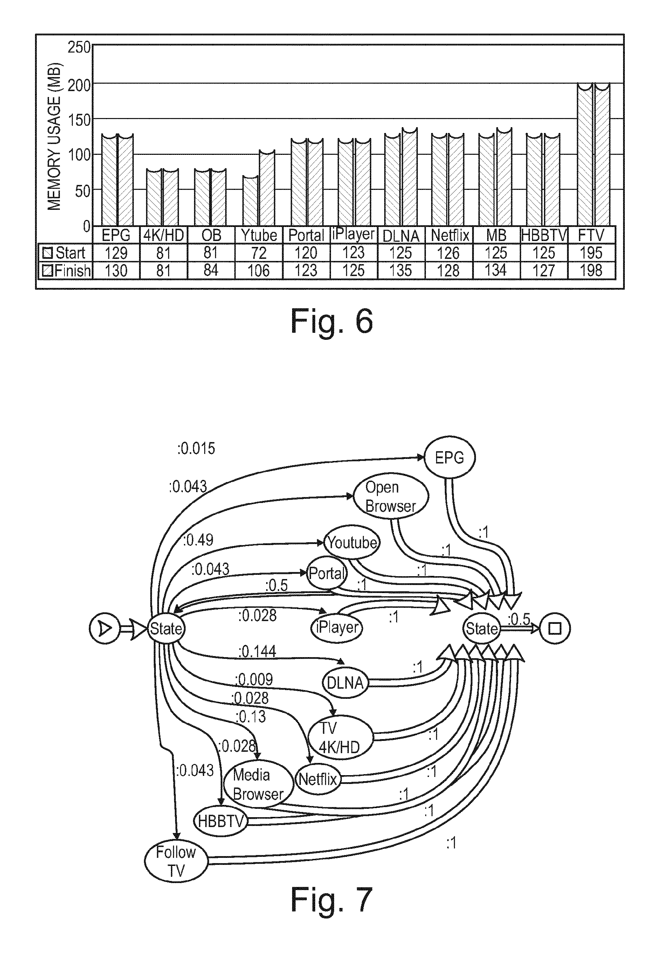

According to these test results the partial probabilities of each feature can be calculated. Then the transition probabilities in the system model are updated according to the test results so that the features with high memory leak are visited more. The updated system model will later be illustrated in Fig. 7.

Fig. 4 shows the top level of a memory torture test model. A model-based MBT technique is utilized for the test design and systemizes test case generation based on models that represent the desired behavior of the SUT. Firstly, system requirements are manually analyzed to determine a system model of the SUT. This system model defines the expected behavior of the SUT with respect to a set of inputs and actions of the user. The SUT model is provided as an input to an MBT tool, which automatically generates a set of test cases by traversing the possible behavioral scenarios on the system model. In addition, the SUT model and the generated test cases help to document and analyze the system behavior. Changes in requirements are reflected to the SUT model to generate new test cases with less effort compared to a manual test case development.

In this third preferred embodiment of the invention, the predetermined system model comprises at least one of Markov chains, event sequence graphs (ESG), unified modelling languages (UML) and finite state automations (FSA). A Markov chain is a discrete-time stochastic process with the Markov property. With this model probabilities of state transitions are specified. The system may change its state from the current state to another state or remain in the same state according to a probability distribution (see also Fig. 1). Markov chains are usually used for statistical analysis and reliability assessments. An MBT tool may use Markov chain models as input. It may use the specified state transition probabilities for generating test cases that cover the most probable execution scenarios.

According to other preferred embodiments, finite state automation in combination with Markov chains are used to express the models of the SUT. The MBT tool allows to use probabilities, stimulation parameters and verification data in transitions and helps to generate test cases automatically using different test case generation algorithms.

In this third preferred embodiment the usage models for automatic test case generation are based on system behavior. A usage model is a formal statistical representation of all possible uses of the system. A model structure is a directed graph in which nodes are states of use and arcs or arrows are possible transitions. Each transition in the model is assigned to a probability value.

Fig. 4 shows 15 states where two of them are initial and final states, 11 of them are submodels, which include other specific states and transitions. A sample sub-model can be seen in Fig. 5 according to the third preferred embodiment of the invention. It illustrates the sub-model of the TV-4K/HD module. The remaining two states of the 15 states are used for providing a loopback in the model in order to check every sub-model.

Every transition has its own probability value. The sum of each transition probability from one state to another must be equal to 1. In the top level of the memory model of Fig. 4, there are 11 transitions from one state so that the probability of 1 is distributed to 11 transitions equally, i.e. 1/11 = 0.091. This means that when test cases are generated they enter the submodels equally and the test case number from each sub-model will be equal. After the probabilities of each sub-model are recalculated, the probabilities of these transitions are manually changed in order to get a specific number of test cases from each sub-model.

Fig. 6 shows the recorded memory usage during text execution according to the third preferred embodiment of the invention. This graph shows an average used memory size for each module at the end of a first iteration of the method. The memory used is calculated when entering and exiting each module. Both values can be seen in above graph. The gap between them is the memory leak caused by that module. In the first iteration 110 test cases are generated in total with equal transition probabilities, which means that each module is visited 10 times. From above graph it can be seen that when the Ytube module is visited it consumes system memory more than other modules. DLNA is on the second place with 10 MB memory leak and Media Browser is third with 9 MB memory leak. In this third preferred embodiment, the transition probabilities are reassigned to be proportional to the amount of memory leak caused by each feature or module.

Fig. 7 shows the updated system model with transition probabilities that are recalculated and entered into the system model according to the third preferred embodiment of the invention. The updated model is used for generating test cases again. In total 82 test cases are generated, wherein 16, 11 and 12 of these test cases relate to Ytube, MB and DLNA, respectively. In addition there are six test cases for each of the remaining seven features and one test case for 4K/HD which has an approximately zero transition probability. When an error occurs the TV resets itself during the testing of a specific module. Hence, critical errors are detected and the testing time is reduced.

As explained above, the invention relates to a method of refining a system model of a test design, to a computer program, to a machine-readable storage unit and to a use of the method in at least one of web and desktop applications and in embedded system applications. The method comprises the steps: a) determining 1 a sample of the test design according to a predetermined system model 10 comprising a plurality of state transitions and a corresponding plurality of transition probability values; b) testing 2 the determined sample according to a predetermined risk of failure, thereby generating 3 the test design based on the plurality of state transitions and/or based on the plurality of transition probability values of step a); and c) recalculating 4 the plurality of transition probability values based on the result of step b) and updating 5 the plurality of transition probability values. In this way, a possibility is provided for detecting critical errors of a test design while reducing the number of test cases and the testing time.

## Claims

1. A method of refining a system model (10) of a test design, comprising the steps:
a) determining (1) a sample of the test design according to a predetermined system model (10) comprising a plurality of state transitions and a corresponding plurality of transition probability values;
b) testing (2) the determined sample according to a predetermined risk of failure, thereby generating (3) the test design based on the plurality of state transitions and/or based on the plurality of transition probability values of step a); and
c) recalculating (4) the plurality of transition probability values based on the result of step b) and updating (5) the plurality of transition probability values.

2. The method according to claim 1, wherein the updated plurality of transition probability values is used in the step of testing (2) such that the system model (10) of the test design is sequentially refined.

3. The method according to one of the preceding claims, wherein the predetermined system model (10) comprises at least one of a Markov chain, an event sequence graph, a unified modelling language and a finite state automation.

4. The method according to one of the preceding claims, storing (6) the updated plurality of transition probability values in a memory unit, thereby generating a memory usage profile adapted for revealing a test path that leads to a memory leak.

5. The method according to one of the preceding claims, wherein during the step of testing (2) utilization of memory is measured before and after the step of generating (3) the test design such that a memory leak value is determined.

6. The method according to claim 5, wherein each transition probability value out of the updated plurality of transition probability values is proportional to the determined memory leak value.

7. The method according to one of the preceding claims, wherein the step of generating (3) the test design is performed according to a predetermined algorithm.

8. The method according to claim 7, wherein the predetermined algorithm comprises at least one of a Chinese postman, a user-oriented, a most probable, a random and a tagged path algorithm.

9. The method according to one of the preceding claims, wherein steps b) and c) of testing (2), generating (3), recalculating (4) and updating (5) are repeated until a predetermined condition is fulfilled.

10. The method according to claim 9, wherein the predetermined condition corresponds to a stop criterion.

11. A computer program, loadable or loaded in a memory of a computer with orders readable by the computer for performing the method according to one of the preceding claims, when the orders are performed on the computer.

12. A machine-readable storage unit, on which a computer program according to the preceding claim is stored.

13. Use of a method according to one of claims 1 to 10 in at least one of web and desktop applications and in embedded system applications, such as automotive, mobile phone, white goods, television and set-top-boxes.

## Amended claims

### Amended claims in accordance with Rule 137(2) EPC.

1. A method of refining a system model (10) of a test design, wherein the test design comprises a plurality of samples, comprising the steps:
a) selecting (1) one sample out of the plurality of samples of the test design according to a predetermined system model (10) comprising a plurality of state transitions and a corresponding plurality of transition probability values; and
b) testing (2) the selected sample according to a predetermined risk of failure, thereby generating (3) an updated test design based on the plurality of state transitions and/or based on the plurality of transition probability values of step a)
**characterized by**
c) recalculating (4) the plurality of transition probability values based on the result of step b), wherein recalculation is based on the predetermined system model (10), and updating (5) the plurality of transition probability values.

2. The method according to claim 1, wherein the updated plurality of transition probability values is used in the step of testing (2) such that the system model (10) of the test design is sequentially refined.

3. The method according to one of the preceding claims, wherein the predetermined system model (10) comprises at least one of a Markov chain, an event sequence graph, a unified modelling language and a finite state automation.

4. The method according to one of the preceding claims, storing (6) the updated plurality of transition probability values in a memory unit, wherein when the steps of the method are executed, a memory usage profile is generated that is adapted for revealing a test path that leads to a memory leak in the test design, wherein the test path corresponds to a path between two different states in the predetermined system model (10) that shows a memory leak value characteristic for the memory leak of the test design.

5. The method according to one of the preceding claims, wherein during the step of testing (2) utilization of memory is measured before and after the step of generating (3) the updated test design such that the memory leak value is determined.

6. The method according to claim 5, wherein each transition probability value out of the updated plurality of transition probability values is proportional to the determined memory leak value.

7. The method according to one of the preceding claims, wherein the step of generating (3) the updated test design is performed according to a predetermined algorithm.

8. The method according to claim 7, wherein the predetermined algorithm comprises at least one of a Chinese postman, a user-oriented, a most probable, a random and a tagged path algorithm.

9. The method according to one of the preceding claims, wherein steps b) and c) of testing (2), generating (3), recalculating (4) and updating (5) are repeated until a predetermined condition is fulfilled.

10. The method according to claim 9, wherein the predetermined condition corresponds to a stop criterion.

11. A computer program, loadable or loaded in a memory of a computer with orders readable by the computer for performing the method according to one of the preceding claims, when the orders are performed on the computer.

12. A machine-readable storage unit, on which a computer program according to the preceding claim is stored.

13. Use of a method according to one of claims 1 to 10 in at least one of web and desktop applications and in embedded system applications, such as automotive, mobile phone, white goods, television and set-top-boxes.
